# EUROPÄISCHE PATENTSCHRIFT

(11) **EP 3 784 374 B1**
(45) Veröffentlichungstag und Bekanntmachung des Hinweises auf die Patenterteilung: **01.06.2022**
(21) Anmeldenummer: 19719333.7
(22) Anmeldetag: 26.04.2019
(51) Int. Cl.: B01F 3/04, B01J 3/02, C02F 1/02, C02F 1/72, C02F 11/08, C02F 103/18

(54) **VERFAHREN UND VORRICHTUNG ZUR BEHANDLUNG EINER ABLAUGE**
METHOD AND DEVICE FOR TREATING SPENT LYE
PROCÉDÉ ET DISPOSITIF DE TRAITEMENT D'UNE LESSIVE RÉSIDUAIRE

(30) Priorität: 27.04.2018 DE 102018110293; 19.06.2018 EP 18178648
(43) Veröffentlichungstag der Anmeldung: 03.03.2021
(73) Patentinhaber: Linde GmbH, 82049 Pullach (DE)
(72) Erfinder: WELLENHOFER, Anton, 82069 Hohenschäftlarn (DE); ZANDER, Jörg, 81479 München (DE); ANANIEVA, Ekaterina, 81369 München (DE); HAIRER, Florian, 80801 München (DE); BAUS, Michael, 82166 Gräfelfing (DE); SCHUBERT, Martin, 81375 München (DE)
(86) Internationale Anmeldenummer: PCT/EP2019/060804
(87) Internationale Veröffentlichungsnummer: WO 2019/207138

(56) Entgegenhaltungen:
- CN-Y- 2 432 206

## Beschreibung

Die Erfindung betrifft ein Verfahren zur Behandlung einer Ablauge einer Laugewäsche unter Verwendung eines Oxidationsreaktors und eine entsprechende Anlage sowie einen entsprechenden Oxidationsreaktor gemäß den jeweiligen Oberbegriffen der unabhängigen Patentansprüche.

### Stand der Technik

Olefine wie Ethylen oder Propylen, aber auch Diolefine wie Butadien sowie Aromaten können durch Dampfspalten (engl. Steam Cracking) aus Paraffinen hergestellt werden. Entsprechende Verfahren sind seit langem bekannt. Zu Details sei auf Fachliteratur wie den Artikel "Ethylene" in Ullmann's Encyclopedia of Industrial Chemistry, Onlineausgabe, 15. April 2007, DOI 10.1002/14356007.a10_045.pub2, verwiesen.

Beim Dampfspalten wird ein sogenanntes Spaltgas (engl. Cracked Gas) erhalten, das neben den Zielprodukten nicht umgesetzte Kohlenwasserstoffe und unerwünschte Nebenprodukte enthält. Dieses Spaltgas wird in bekannten Verfahren zunächst einer Aufbereitung unterworfen, bevor es einer Fraktionierung zur Gewinnung unterschiedlicher Kohlenwasserstoffe bzw. Kohlenwasserstofffraktionen zugeführt wird. Details sind in dem zitierten Artikel insbesondere in Abschnitt 5.3.2.1, "Front-End Section" und 5.3.2.2., "Hydrocarbon Fractionation Section", beschrieben.

Eine entsprechende Aufbereitung umfasst insbesondere eine sogenannte Sauergasentfernung, bei der Komponenten wie Kohlendioxid, Schwefelwasserstoff und Mercaptane aus dem Spaltgas abgetrennt werden. Das Spaltgas wird typischerweise vor und nach einer entsprechenden Behandlung verdichtet. Beispielsweise kann das Spaltgas einem sogenannten Rohgasverdichter auf einem Zwischendruckniveau entnommen, der Sauergasentfernung unterworfen, und anschließend in dem Rohgasverdichter weiter verdichtet werden.

Die Sauergasentfernung kann insbesondere eine sogenannte Laugewäsche unter Verwendung von Natronlauge umfassen. Insbesondere bei hohen Konzentrationen an Schwefelverbindungen kann die Laugewäsche auch mit einer Aminwäsche, beispielsweise unter Verwendung von Ethanolamin, kombiniert werden. Die in der Laugewäsche erhaltene Ablauge, die Sulfid und Carbonat in einem Gehalt von einigen Prozent aufweist, wird typischerweise in einer Ablaugebehandlung oxidiert und ggf. neutralisiert, bevor sie einer biologischen Abwasserbehandlung unterworfen werden kann. Die Oxidation dient zur Entfernung toxischer Komponenten und zur Reduzierung des biologischen Sauerstoffbedarfs. Die Ablaugeoxidation wird typischerweise in Form einer chemischen Nassoxidation des Sulfids mit Sauerstoff in Lösung durchgeführt. Aus dem Stand der Technik sind mehrere unterschiedliche Verfahren zur Nassoxidation von verbrauchten Ablaugen bekannt. Beispielsweise sei auf den Artikel von C.B. Maugans und C. Alice, "Wet Air Oxidation: A Review of Commercial Subcritical Hydrothermal Treatment", IT3'02 Conference, 13. bis 17. Mai 2002, New Orleans, Louisiana, oder die US 5,082,571 A und die CN 2432206 Y verwiesen.

Die verbrauchte Ablauge kann in derartigen Verfahren auf den gewünschten Reaktionsdruck gebracht und im Gegenstrom mit der oxidierten Ablauge angewärmt werden. Die erwärmte verbrauchte Ablauge kann anschließend unter Zufuhr von Sauerstoff in einen Oxidationsreaktor geführt und oxidiert werden. Der zur Reaktion benötigte Sauerstoff wird dabei entweder in Form von Luft oder als reiner Sauerstoff zugefügt. Eine zusätzliche, in anderen Verfahrensvarianten auch die ausschließliche, Anwärmung der verbrauchten Ablauge kann durch Einleitung von heißem Dampf in den Oxidationsreaktor vorgenommen werden.

Nach einer typischen Verweildauer von ca. einer Stunde (abhängig von der gewählten Temperatur und dem gewählten Druck) wird die oxidierte Ablauge mit dem zugehörigen Abgas über einen Wärmetauscher unter Erwärmung der verbrauchten Ablauge abgekühlt. Nach einer Druckkontrolle wird in einem anschließenden Abscheidebehälter das Abgas von der Flüssigkeit getrennt. Die flüssige oxidierte Ablauge kann danach unter optionaler Einstellung des pH-Werts (Neutralisation) in ein Verfahren zur biologischen Abwasseraufbereitung geführt werden.

Weitere Verfahren und Verfahrensvarianten sind aus der DE 10 2006 030 855 A1, der US 4,350,599 A und dem Artikel von C.E. Ellis, "Wet Air Oxidation of Refinery Spent Caustic", Environmental Progress, Band 17, Nr.1, 1998, Seiten 28-30 beschrieben.

Die Oxidation der schwefelhaltigen Verbindungen in der verbrauchten Ablauge erfolgt normalerweise in zwei unterschiedlichen Schritten. Bei der Oxidation von Sulfiden entstehen parallel Sulfit, Sulfat und Thiosulfat. Während Sulfit sehr schnell zu Sulfat weiteroxidiert wird, ist die Weiterreaktion von Thiosulfat vergleichsweise langsam. Die wesentlichen Reaktionen sind dabei folgende:

2 Na₂S + 2 O₂ + H₂O ⇄ Na₂S₂O₃ + 2 NaOH (1)

Na₂S₂O₃ + 2 NaOH ⇄ 2 Na₂SO₄ + H₂O (2)

Stand der Technik bei der Ablaugeoxidation sind ein Betriebsdruck von 6 bis 40 bar und eine Betriebstemperatur bis über 200 °C, beispi elsweise bis 210 °C. Je höher die Temperatur in Reaktor gewählt wird, desto höher muss der Druck eingestellt werden, da der Dampfdruck stark mit der Temperatur steigt. Die für einen weitgehenden Umsatz erforderliche Verweilzeit im Reaktor sinkt von größenordnungsmäßig 12 Stunden bei 6 bar auf 10 % der genannten Verweilzeit bei 30 bar.

Nach Stand der Technik wird die Ablauge in den Oxidationsreaktor aufgegeben. Ein Sauerstoffträger, in der Regel Luft, wird an beliebiger Stelle, meist vor dem eigentlichen Reaktor, mit der Lauge gemischt. Die Ablauge oder das Ablauge-Sauerstoffträger-Gemisch kann in einem Wärmetauscher vorgewärmt werden.

Gemäß dem Stand der Technik kann die Ablauge also vorgewärmt in den Oxidationsreaktor aufgegeben werden. Dies ist jedoch nicht zwingend erforderlich. Eine weitere Anwärmung (oder die einzige Anwärmung) erfolgt häufig mittels einer Dampfzugabe, die entweder in die zulaufende Ablauge oder direkt in den Reaktor erfolgen kann, sowie allgemein auch durch die Reaktionsenthalpie bzw. Exothermie der Oxidationsreaktionen. Wie erwähnt, kann in entsprechenden Verfahren auch eine Vorwärmung der Ablauge zum Reaktor gegen das Produkt aus dem Reaktor durchgeführt werden.

Da sich der Druck der Gasphase aus dem Dampfdruck und dem Druck der Oxidationsluft addiert und der Druck des zuströmenden Dampfes mindestens so groß wie der Reaktordruck sein muss, kommt für die erwähnte Dampfzugabe vor allem überhitzter Dampf in Frage. Dieser kondensiert partiell und liefert auf diese Weise die zusätzliche Wärme.

Ein für die Ablaugeoxidation verwendeter Oxidationsreaktor ist gemäß dem Stand der Technik derart aufgebaut, so dass sich eine gerichtete Strömung im Reaktor ausbildet und dadurch eine größere Reaktionsgeschwindigkeit und ein höherer Umsatz möglich sind. Hierzu können Einbauten in der Form von gelochten Böden verwendet werden.

Verfahren der zuvor erläuterten Art sind bspw. aus der DE 10 2010 049 445 A1, bei der ein Druck von mehr als 60 bar in einem entsprechenden Reaktionsreaktor eingesetzt wird, sowie aus der die DE 10 2006 030 855 A1 bekannt.

Reaktoren zur Ablaugeoxidation sind wegen der extremen Beanspruchungen aus hochwertigen Materialien wie Nickelbasislegierungen oder Nickel gefertigt. Auch derartige Materialien können jedoch durch hohe Sulfidkonzentrationen bei erhöhten Temperaturen angegriffen werden.

Die erwähnte Dampfzugabe in den Oxidationsreaktor erfolgt typischerweise über eine oder mehrere Düsen oder Lanzenkonstruktionen. Die Verteilung des Dampfes soll dabei möglichst gleichmäßig über die Fläche des Reaktors erfolgen, da der Oxidationsreaktor, wie erwähnt, typischerweise in einer Richtung durchströmt und die Quervermischung dadurch limitiert wird. Eine entsprechende Dampfzugabe kann, wie nachfolgend erläutert, in herkömmlichen Verfahren und Anlagen nicht oder nur in geringem Umfang gesteuert werden.

Die Aufgabe der vorliegenden Erfindung ist es, ein Verfahren zur Nassoxidation einer Ablauge anzugeben, das es ermöglicht, insbesondere bei einem Betriebsdruck von 20 bis 40 bar und minimaler Verweilzeit eine optimale Oxidation der Schwefelbestandteile der Ablauge zu erreichen. Gleichzeitig soll der Prozess über einen weiteren Betriebsbereich steuerbar sein, insbesondere unter Einsatz sehr unterschiedlicher Dampfmengen. In dem Verfahren soll die Spitzenbetriebstemperatur verringert werden, um den korrosiven Angriff auf das Reaktormaterial, der vor allem von der Temperatur abhängig ist, zu minimieren. Aufgabe der vorliegenden Erfindung ist ferner, eine entsprechend betreibbare Anlage bereitzstellen.

### Offenbarung der Erfindung

Vor diesem Hintergrund schlägt die vorliegende Erfindung ein Verfahren zur Behandlung einer Ablauge einer Laugewäsche unter Verwendung eines Oxidationsreaktors und eine entsprechende Anlage sowie einen entsprechenden Oxidationsreaktor mit den Merkmalen der jeweiligen unabhängigen Patentansprüche vor. Ausgestaltungen sind Gegenstand der abhängigen Patentansprüche sowie der nachfolgenden Beschreibung.

### Vorteile der Erfindung

Im Verfahren gemäß dem Stand der Technik erfolgt, wie mehrfach erwähnt, eine optionale Vorwärmung von Lauge und Luft, die in einen entsprechenden Oxidationsreaktor eingespeist werden. Ferner wird in den Oxidationsreaktor bzw. die dort vorliegende Ablauge überhitzter Dampf eingebracht. Dieser wird typischerweise in einem Mengenstrom unabhängig vom aktuellen Betriebsfall konstant gehalten. Daher ändert sich in den entsprechenden herkömmlichen Verfahren die Temperatur im Reaktor entsprechend der zugeführten Laugenmenge. Die Temperatur im Reaktor kann die Temperatur des Dampfs erreichen, wenn keine Lauge eingespeist wird.

In derartigen herkömmlichen Verfahren erfolgt die Zugabe des überhitzen Dampfs über einfache Düsen oder Lanzenkonstruktionen. Durch die Verwendung von überhitzem Dampf wird die Wahrscheinlichkeit von Dampfschlägen im Dampfsystem verringert. Dadurch ist der Einsatz einfacher gelochter Rohrkonstruktionen als Verteiler möglich, die dann eine ausreichende Vermischung erlaubt. Durch die Verwendung von überhitzem Dampf sind jedoch lokal hohe Spitzentemperaturen am Metall nicht auszuschließen. Der Ort der Dampfeinspeisung ist die heißeste Stelle eines entsprechenden Reaktors, was diesen zu einem kritischen Punkt bezüglich eines Korrosionsangriffs macht.

Durch die Konstruktion in herkömmlichen Verfahren eingesetzter Dampflanzen ist eine Minimierung der Dampfmenge schwierig bis unmöglich. Im Optimalfall kann die geringste eingespeiste Dampfmenge minimal 40%, im Realfall eher minimal 60% der Normallast, jedoch nicht weniger, betragen. Dies ist darauf zurückzuführen, dass durch eine ungleichmäßige Anströmung aller Lanzenlöcher Dampfschläge durch beispielsweise lokale Einkondensation und eine Fehlverteilung des Dampfes zu erwarten sind.

Beim Betrieb im gewünschten Druck- und Temperaturbereich von bspw. ca. 30 bar und 200 °C ist der Abstand zwischen der gewünschten max imalen Materialwandtemperatur und der Betriebstemperatur klein. Der Abstand beträgt typischerweise nur 20 bis 50°C. Die maximal gewünschte Betriebstemperatur soll dabei nicht überschritten werden. Daher muss die Temperatur im Reaktor geregelt werden. Diese Temperaturregelung erfolgt vorteilhafterweise über die Menge des zugegebenen Dampfes. Diese sollte vorteilhafterweise von 0 bis 100% regelbar sein, wobei eine ausreichende Gleichverteilung des Dampfes auch bei kleinen Dampfbetriebsmengen gewährleistet sein sollte. Hierbei wird sinnvollerweise Sattdampf oder leicht d.h. um 5 bis 10 °C überhitzter Dampf, eingesetzt, um die Materialspitzentemperatur zu begrenzen.

Zur Erreichung dieser Ziele schlägt die vorliegende Erfindung ein Verfahren zur Behandlung einer Ablauge einer Laugewäsche unter Verwendung eines Oxidationsreaktors vor, wobei, wie erwähnt, die Ablauge zusammen mit Sauerstoff oder einem sauerstoffhaltigen Gasgemisch in den Oxidationsreaktor eingebracht und ferner Dampf in den Oxidationsreaktor eingeleitet wird. Erfindungsgemäß ist vorgesehen, dass der Dampf zumindest teilweise mittels einer Dampfeinspeisevorrichtung eingeleitet wird, die einen oder mehrere zylindrische Abschnitte mit jeweils einer Mittelachse und jeweils einer Wandung, jeweils einem ersten Ende und jeweils einem zweiten Ende aufweist, wobei das erste Ende jeweils nach unten weist und der eine oder die mehreren zylindrischen Abschnitte jeweils an dem ersten Ende durch eine Abschlussfläche verschlossen sind, so dass sich in dem einen oder in den mehreren zylindrischen Abschnitten durch eine Kondensation des Dampfs jeweils Kondensat ansammeln kann, die Mittelachse lotrecht ausgerichtet ist oder wird, wobei in der Wandung mehrere Gruppen von Öffnungen ausgebildet sind, wobei jede der Gruppen jeweils mehrere der Öffnungen umfasst und wobei die mehreren Öffnungen jeder der Gruppen in einer oder mehreren Ebenen angeordnet sind, die jeweils senkrecht zur Mittelachse ausgerichtet ist oder sind. Mehrere zylindrische Abschnitte können insbesondere in größeren Reaktoren vorgesehen sein. Der Übersichtlichkeit halber ist nachfolgend von "einem" zylindrischen Abschnitt die Rede, die Erläuterungen betreffen jedoch auch den Fall, dass mehrere zylindrische Abschnitte vorgesehen sind.

Durch den Einsatz eines entsprechenden Verfahrens werden die zuvor erläuterten Vorteile erzielt. Wird nachfolgend auf Merkmale und Vorteile von Ausgestaltungen erfindungsgemäßer Verfahren Bezug genommen, betreffend diese erfindungsgemäße Anlagen bzw. Oxidationsreaktoren mit entsprechenden Dampfeinspeisevorrichtungen in gleicher Weise. Die Merkmale erfindungsgemäßer Verfahren und Vorrichtungen sowie entsprechender Varianten werden also gemeinsam erläutert.

Im Rahmen der vorliegenden Erfindung wird im Gegensatz zu einem horizontalen, in irgendeiner bekannten Art mit einer oder mehreren Lochreihen versehenen Rohrleitung Dampf vorteilhafterweise ausschließlich über den erwähnten zylindrischen Abschnitt einer oder mehrerer entsprechender Dampfeinspeisevorrichtungen in den Reaktor eingeleitet und damit in die Ablauge bzw. in ein Zweiphasengemisch aus Ablauge und Luft eingebracht. Der zylindrische Abschnitt kann dabei als "Zapfen" ausgebildet sein, der, insbesondere mittig, in einem entsprechenden Reaktor senkrecht angeordnet ist. Ein entsprechender Oxidationsreaktor ist typischerweise seinerseits zumindest teilweise zylindrisch ausgebildet. In diesem Fall fallen insbesondere die Mittelachse des zylindrischen Abschnitts der Dampfeinspeisevorrichtung und eine Mittelachse des Oxidationsreaktors bzw. dessen zylindrischen Abschnitts zusammen.

Dadurch, dass der zylindrische Abschnitt senkrecht angeordnet ist und in diesem mehrere Gruppen von Öffnungen vorgesehen sind, die in mehreren Ebenen übereinander angeordnet sind, kann sich in dem zylindrischen Abschnitt durch eine Kondensation des Dampfs Kondensat ansammeln, das einen Kondensatstand entsprechend den Druckverhältnissen in dem zylindrischen Abschnitt ausbilden kann. Mit anderen Worten wird in dem erfindungsgemäßen Verfahren Dampf in der Dampfeinspeisevorrichtung bzw. in deren zylindrischem Abschnitt zur Kondensation gebracht, wobei sich in dem zylindrischen Abschnitt ein Kondensatstand ausbildet, der insbesondere vom Druck des eingespeisten Dampfs abhängt.

Bei geringen Dampfvolumina füllt sich dabei der zylindrische Abschnitt vergleichsweise stark mit Kondensat und der Dampf durchströmt nur jene Öffnungen, die in weiter oben angeordneten Ebenen ausgebildet sind. Auf diese Weise kann sichergestellt werden, dass die durchströmten Öffnungen jeweils optimal mit Dampf beaufschlagt werden und sich optimale Strömungsverhältnisse einstellen. Im Gegensatz werden in herkömmlichen Anordnungen stets sämtliche Öffnungen mit Dampf beaufschlagt, die einzelnen Öffnungen für sich betrachtet aber schwächer durchströmt. Durch ein erfindungsgemäß vorgeschlagenes Verfahren ergibt sich daher eine gleichmäßige Verteilung des Dampfs mit geringer Neigung zu Dampfschlägen und Pumpen. Bei höherer Last, d.h. bei höheren Dampfvolumen, und damit einem höheren Druck in dem zylindrischen Abschnitt, wird der zylindrische Abschnitt immer weiter von Kondensat entleert und weitere Öffnungen, die in tieferliegenden Ebenen angeordnet sind, werden mit Dampf durchströmt, bis Volllast erreicht ist.

Ist im Rahmen der vorliegenden Anmeldung davon die Rede, dass jede der Gruppen mehrere der Öffnungen umfasst und die mehreren Öffnungen jeder der Gruppen in einer oder mehreren Ebenen angeordnet sind, sei hierunter verstanden, dass jeweils unterschiedliche Gruppen jeweils Öffnungen aufweisen können, die oberhalb und unterhalb einer Bezugsebene angeordnet sein können. Auf diese Weise kann auch bei leichtem Schrägstand eines entsprechenden Reaktors oder bei Turbulenzen des Kondensatstands in dem zylindrischen Abschnitt, insbesondere aufgrund der Dampfeinspeisung, eine ausreichende Durchströmung sichergestellt werden. Im einfachsten Fall, d.h. wenn die mehreren Öffnungen jeder der Gruppen jeweils in einer Ebene angeordnet sind, sind dabei mehrere Lochreihen übereinander angeordnet, wobei die Öffnungen unterschiedlicher Lochreihen vorteilhafterweise jeweils auf Lücke stehen, damit eine besonders gute Dampfdurchmischung sichergestellt werden kann.

Vorteilhafterweise sind in jeder der Ebenen die hier jeweiligen Öffnungen äquidistant um einen durch eine Schnittlinie der jeweiligen Ebene mit der Wandung definierten Umfang verteilt angeordnet. Mit anderen Worten schließen jeweils Radiallinien, die von der Mittelachse in der entsprechenden Ebene ausgehen und durch die jeweiligen Öffnungen verlaufen, identische Winkel ein. Auf diese Weise, kann, insbesondere bei einer zylindrischen Ausbildung des Oxidationsreaktors, eine gleichmäßige Durchmischung sichergestellt werden.

Vorteilhafterweise sind in der Dampfeinspeisevorrichtung, die in einem entsprechenden Verfahren verwendet wird, die Öffnungen jeder der Gruppen in mehreren Ebenen angeordnet und eine Maximaldistanz der Ebenen, in der die Öffnungen einer der Gruppen liegen, ist geringer als eine Minimaldistanz der Ebenen, in der die Öffnungen zweier unterschiedlicher Gruppen liegen. Wie bereits erwähnt, müssen also die Öffnung jeder der Gruppen nicht in genau einer Ebene liegen, sondern können auch in unterschiedlichen Ebenen angeordnet sein, die jedoch näher beieinander liegen als die Ebenen zweier unterschiedlicher Gruppen.

Vorteilhafterweise sind in jeder der Ebenen zwei, drei, vier oder mehr der Öffnungen angeordnet und dabei, wie erwähnt, äquidistant entlang der Wandung um den Umfang des zylindrischen Abschnitts verteilt. Hieraus ergeben sich Zwischenwinkel zwischen den Öffnungen von 180°C, 120°C bzw. 90°C. Die An zahl der Öffnungen pro Ebene kann dabei auch unterschiedlich sein. Insbesondere kann in einer obersten Ebene die Anzahl von Öffnungen minimiert sein, so dass ein möglichst kleiner Unterlastbetrieb gewährleistet werden kann.

Gemäß der Erfindung weist der zylindrische Abschnitt der Dampfeinspeisevorrichtung ein erstes Ende und ein zweites Ende auf und ist an dem ersten Ende durch eine Abschlussfläche vorschlossen. Das erste Ende weist dabei nach unten und stellt sicher, dass das Kondensat in den zylindrischen Abschnitt ansammeln kann. In der Abschlussfläche kann dabei insbesondere zumindest eine weitere Öffnung ausgebildet sein, die gewährleistet, dass Kondensat aus den zylindrischen Abschnitt ablaufen kann. Es können auch mehrere Öffnungen in der Abschlussfläche angeordnet sein, deren Größe und Anzahl sich insbesondere nach der jeweils zu bearbeiteten bzw. einzuspeisenden Dampfmenge richten kann.

Vorteilhafterweise ist der zylindrische Abschnitt mit dem zweiten Ende mit einer Dampfzuleitung und/oder Halterung verbunden, die sich von dem zweiten Ende des zylindrischen Abschnitts zu einer Wandung des verwendeten Oxidationsreaktors erstreckt. Ist dabei eine Dampfzuleitung vorgesehen, kann diese insbesondre zylindrisch ausgebildet sein und einen gleichen oder unterschiedlichen Durchmesser wie der zylindrische Abschnitt der Dampfeinspeisevorrichtung aufweisen. Um eine einfache Fertigung sicherzustellen, sind die Durchmesser vorteilhafterweise identisch. Vorteilhafterweise sind die Öffnungen in dem zylindrischen Abschnitt derart angeordnet, dass aus diesem Dampf jeweils in einer Ausströmrichtung ausströmt, die unterschiedlich zu einer Richtung ist, in der sich die Dampfzuleitung und/oder die Halterungen der Aufsicht aus Richtung der Mittelachse erstreckt. Mit anderen Worten wird bzw. werden die Öffnungen jeweils derart angeordnet, dass durch diesen ausströmender Dampf vorteilhafterweise nicht auf die Zuleitung und/oder Halterung gerichtet ist, um eine möglichst freie Ausströmung sicherzustellen.

Insgesamt kann der Durchmesser der Öffnungen 5 bis 15 mm betragen. Vorteilhafterweise beträgt ein Abstand zwischen dem zweiten Ende und einer am nächsten hierzu angeordneten ersten Gruppe von Öffnungen L, wobei L ≥ 15mm, besonders vorzugsweise ≥ 20 mm, beträgt. Vorteilhafterweise ist der Abstand zwischen zumindest einem Teil der Gruppen von Öffnungen dabei gleich und beträgt ebenfalls L. Abweichend hierzu kann insbesondere vorgesehen sein, dass ein Abstand zwischen der erwähnten ersten Gruppe von Öffnungen, d.h. der Gruppe von Öffnungen, die der Halterung bzw. der Dampfzuleitung am nächsten liegt, und eine auf diese Richtung des ersten Endes folgenden zweiten Gruppe von Öffnungen das 1,5-fache von L beträgt. Mit besonderem Vorteil beträgt ein Abstand zwischen den ersten Ende des zylindrischen Abschnitts, d.h. zwischen dem Ende an dem dieser mit der Abschlussfläche verschlossen ist, und einer am nächsten hierzu angeordneten Gruppe von Öffnungen also M, wobei M insbesondere dem 1,5-fachen des Durchmessers der Öffnungen entspricht.

Wie erwähnt, werden die Löcher bzw. Öffnungen in unterschiedlichen Gruppen versetzt zueinander angeordnet, insbesondere auf Lücke zueinander gestellt. Die Öffnungen werden, wie ebenfalls erwähnt, vorteilhafterweise derart angeordnet, dass der sich ausbildende Dampfstrahl nur wenig von der Zuleitung bzw. den Trägern der Dampfeinspeisevorrichtung beeinflusst ist. Werden bspw. drei Öffnungen verwendet beträgt der Winkel jeweiligen Radiallinien, die sich ausgehend von der Mittellinie durch die Öffnungen erstrecken, 120°. Eine Radiallinie, d ie sich ausgehend von der Mittellinie in Richtung zu einer der Öffnungen erstreckt, ist vorteilhafterweise 60°zur Achse eines entsprechenden Trägers bzw. einer Zuleitung ausgerichtet. Werden vier Öffnungen eingesetzt und beträgt der Winkel zwischen den jeweiligen Radiallinien 90°, sind die Radiallinien vorteilhafterweise 45°zur Achse des T rägers ausgerichtet.

Vorteilhafterweise sind die Öffnungen von Dampfführungstrukturen umgeben, die als Düsen oder einfache Bohrungen in der Wandung ausgebildet sein können. Diese definieren eine Ausströmrichtung für den Dampf aus den entsprechenden Öffnungen. Die Ausströmrichtung entspricht einer Radialrichtung ausgehend von der Mittelachse in der jeweiligen Ebene oder ist um bis zu 30°gegenüb er dieser geneigt.

Ist vorstehend davon die Rede, dass eine Dampfzuleitung verwendet wird, ist diese vorteilhafterweise zu einer nicht durchströmten Seite vorschlossen oder wird vorteilhafterweise mit Ablaufbohrungen versehen.

Im Gegensatz zum Stand der Technik kann die Geschwindigkeit des Dampfs in der Dampfzuleitung der Geschwindigkeit des Dampfs in den jeweiligen Bohrungen entsprechen. In herkömmlichen Vorrichtungen ist erstere dagegen stets um einen Faktor von mehr als 5 größer. Im Rahmen der vorliegenden Erfindung kann in der Zuleitung eine Dampfgeschwindigkeit verwendet bzw. eingestellt werden, die vorteilhafterweise mindestens der Geschwindigkeit des Dampfs in den Öffnungen entspricht und bevorzugt um mehr als den Faktor 1,5 größer ist als diese. In allen Fällen kann die Dampfgeschwindungkeit in der Zuleitung dabei jedoch unterhalb des 10-fachen, 5-fachen oder 2-fachen der Dampfgeschwindigkeit in den Öffnungen liegen.

Ein weiterer Vorteil der erfindungsgemäß vorgeschlagenen Maßnahmen ist der, dass der Druckverlust der Zuleitung einen minimalen Einfluss auf die Durchströmung der Öffnungen hat, da die Öffnungen zentral angeordnet sind und somit praktisch bei gleichem Vordruck arbeiten. Bei herkömmlichen Längsverteilern (Dampfpflanzen) führt ein hoher Druckverlust zu einer starken Änderung der Durchströmung der Düsen über die Länge des Längsverteilers.

Im Rahmen der vorliegenden Erfindung kann die Dampfgeschwindigkeit in den Öffnungen bzw. die minimale Geschwindigkeit über die sogenannte Froude-Zahl (Fr) festgelegt werden, wobei ein übliches Kriterium Fr > 6 ist. Die maximale Geschwindigkeit wird über die Erosionsgeschwindigkeit bezüglich Dampf und Lanzenmaterial festgelegt. Die Zielgröße im genannten Einsatz liegt 10 bis 65 Metern pro Sekunde, insbesondere bei 20 bis 30 Metern pro Sekunde.

Eine Anlage und ein Oxidationsreaktor mit entsprechenden Merkmalen sind ebenfalls Gegenstand der vorliegenden Erfindung. Zu Merkmalen und Vorteilen dieser Anlage und dieses Oxidationsreaktors wird auf die obigen Erläuterungen und die entsprechenden Patentansprüche ausdrücklich verwiesen.

Die Erfindung wird nachfolgend unter Bezugnahme auf die beigefügten Zeichnungen näher erläutert, welche eine bevorzugte Ausgestaltung der vorliegenden Erfindung veranschaulichen.

### Kurze Beschreibung der Zeichnungen

Figur 1 veranschaulicht einen Oxidationsreaktor zum Einsatz in einer Anlage gemäß einer Ausführungsform der Erfindung in schematischer Teildarstellung.
Figur 2A veranschaulicht eine Dampfeinspeisevorrichtung zum Einsatz in einer Anlage gemäß einer Ausführungsform der Erfindung in einer ersten Ausgestaltung.
Figur 2B veranschaulicht eine Dampfeinspeisevorrichtung zum Einsatz in einer Anlage gemäß einer Ausgestaltung der vorliegenden Erfindung in einer zweiten Ausgestaltung.

In den Figuren sind aneinander funktional oder baulich entsprechende Elemente jeweils mit identischen Bezugszeichen angegeben. Diese werden der Übersichtlichkeit halber nicht wiederholt erläutert.

### Ausführliche Beschreibung der Zeichnungen

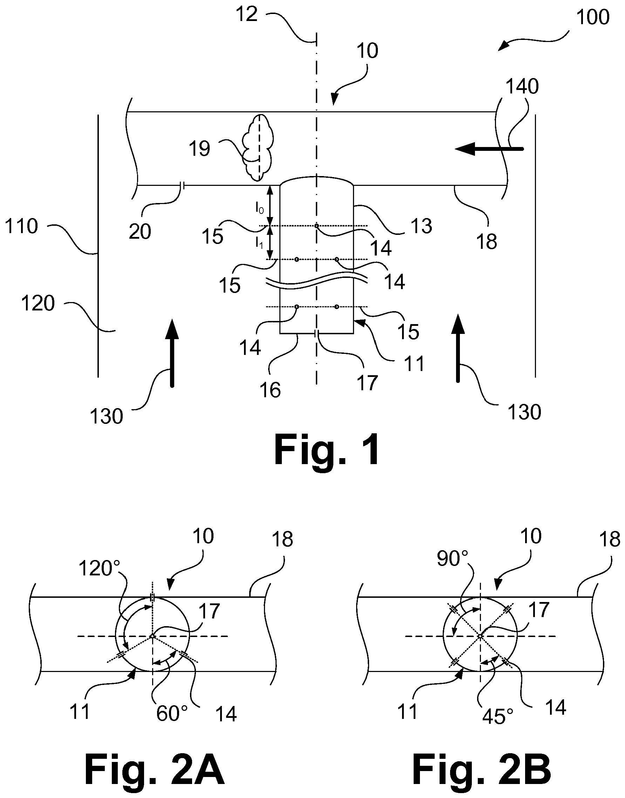

In Figur 1 ist ein Abschnitt eines Oxidationsreaktors zum Einsatz in einer Anlage gemäß einer Ausgestaltung der vorliegenden Erfindung stark vereinfacht schematisch veranschaulicht und insgesamt mit 100 bezeichnet. Der Oxidationsreaktor 100 weist eine Wandung 110 auf, die einen Innenraum 120 des Oxidationsreaktors 100 einschließt. In den Innenraum 120 kann eine Ablauge bzw. ein Ablauge-Luft-Gemisch aufgenommen und bspw. im Wesentlichen in Richtung hier jeweils mit 130 veranschaulichter Pfeile geführt werden.

Wie erwähnt, kann insbesondere die Oxidationsluft und die Ablauge vor der Einspeisung in den Oxidationsreaktor 100 erwärmt werden. Eine zusätzliche Erwärmung kann mittels eines Dampfstroms 140 erfolgen, die wie hier veranschaulicht über eine Dampfeinspeisevorrichtung 10 in den Oxidationsreaktor 100 bzw. in die in diesem aufgenommenen Ablauge eingeleitet wird.

Die Dampfeinspeisevorrichtung 10 umfasst dabei einen zylindrischen Abschnitt 11, der eine Mittelachse 12 aufweist, die insbesondere einer Mittelachse des Oxidationsreaktors 100 insgesamt entsprechen kann. Der zylindrische Abschnitt 11 umfasst eine Wandung 13. Die Mittelachse 12 ist lotrecht ausgerichtet. In der Wandung 13 sind mehrere Öffnungen 14 angeordnet, die nur teilweise mit Bezugszeichen versehen sind. Die Öffnungen 14 sind in mehreren Gruppen angeordnet, wobei jede der Gruppen mehrere der Öffnungen 14 umfasst und in mehreren Öffnungen jeder der Gruppen in einer oder mehreren Ebenen, die hier gestrichelt veranschaulicht wurden und mit 15 bezeichnet sind, angeordnet sind.

Die Ebenen 15 sind jeweils senkrecht zur Mittelachse 12 ausgerichtet. Mit anderen Worten schneidet die Mittelachse 12 die Ebenen 15 senkrecht. Auf diese Weise werden im Rahmen der vorliegenden Erfindung mehrere Reihen von Öffnungen 14 bzw. Lochreihen ausgebildet, die es ermöglichen, dass sich in den zylindrischen Abschnitt 11 Kondensat anstaut und nur die freibleibenden Öffnungen 14 Dampf in den Innenraum 120 des Oxidationsreaktors 100 bzw. in die dort vorliegende Ablauge eingeleitet wird. Auf diese Weise kann ein entsprechender Oxidationsreaktor 100 optimiert betrieben werden, wie mehrfach zuvor erläutert.

Wie erläutert, sind dabei die Öffnungen 14 in den unterschiedlichen Ebenen 15 in gleicher oder unterschiedlicher Anzahl vorgesehen, wobei insbesondere in einer hier oben dargestellten Ebene 15 nur eine geringere Anzahl von Öffnungen vorgesehen sein kann, um eine Minimallast zu ermöglichen. Zu den Abständen I₀ und I₁ der einzelnen Ebenen 14 zueinander und in Bezug auf den zylindrischen Abschnitt 11 sei auf die obigen Erläuterungen ausdrücklich verwiesen.

An einem unteren Ende bzw. ersten Ende ist der zylindrische Abschnitt 11 von einer Abschlussfläche 16 verschlossen, in der zumindest eine weitere Öffnung 17 angeordnet ist. An einem entgegengesetzten zweiten Ende des zylindrischen Abschnitts 11 ist dieser an eine Dampfzuleitung 18 angebunden, die einen gleichen oder unterschiedlichen Durchmesser zu dem zylindrischen Abschnitt aufweisen kann. Die am nächsten zu der Dampfzuleitung 18 liegende Reihe von Öffnungen 14 weist dabei vorteilhafterweise geringste Anzahl von Öffnungen 14 auf. Ausbildung und Ausrichtung der jeweiligen Öffnungen 14 wurden zuvor ausführlich erläutert. Die Dampfzuleitung 18 ist an einem Ende von einem Verschluss verschlossen bzw. weist diese eine oder mehrere weitere Öffnungen 20 auf.

In Figur 2A ist die Dampfeinspeisevorrichtung 10, die bereits in Figur 1 als Teil des Oxidationsreaktors 100 veranschaulicht ist, in anderer Perspektive dargestellt, wobei hier eine Draufsicht entlang der Achse 12 gemäß Figur 1 von unten veranschaulicht ist. Wie hier dargestellt, sind die Öffnungen 14 dabei in dem zylindrischen Abschnitt 11 derart angeordnet, dass eine durch diese definierte Ausströmrichtung für Dampf von einer Mittelachse der Dampfzuleitung 18 abweicht.

Sind dabei, wie in dem in Figur 2A dargestellten Beispiel gezeigt, in einer Ebene drei Öffnungen veranschaulicht, beträgt ein Zwischenwinkel zwischen diesen 120°C und diese sind im dargestellten Winkel von 60°C gegenü ber einer Senkrechten zur Mittelachse der Zuleitung 18 geneigt.

In Figur 2B sind die entsprechenden, bereits in Figur 2A dargestellten Verhältnisse für den Fall dargestellt, dass vier Öffnungen 14 in einer Ebene 15 eines entsprechenden zylindrischen Abschnitts 11 vorgesehen sind.

## Patentansprüche

1. Verfahren zur Behandlung einer Ablauge einer Laugewäsche unter Verwendung eines Oxidationsreaktors (100), wobei die Ablauge mit Sauerstoff oder mit einem sauerstoffhaltigen Gasgemisch in den Oxidationsreaktor (100) eingebracht und Dampf den Oxidationsreaktor (100) eingeleitet wird, **dadurch gekennzeichnet, dass** der Dampf zumindest teilweise mittels einer Dampfeinspeisevorrichtung (10) eingeleitet wird, die einen oder mehrere zylindrische Abschnitte (11) mit jeweils einer Mittelachse (12) und jeweils einer Wandung (13), jeweils einem ersten Ende und jeweils einem zweiten Ende aufweist, wobei das erste Ende jeweils nach unten weist und der eine oder die mehreren zylindrischen Abschnitte (11) jeweils an dem ersten Ende durch eine Abschlussfläche (16) verschlossen sind, so dass sich in dem einen oder in den mehreren zylindrischen Abschnitten (11) durch eine Kondensation des Dampfs jeweils Kondensat ansammeln kann, die Mittelachse (12) lotrecht ausgerichtet ist oder wird, in der Wandung mehrere Gruppen von Öffnungen (14) ausgebildet sind, jede der Gruppen mehrere der Öffnungen (14) umfasst, und die mehreren Öffnungen (14) jeder der Gruppen in einer oder mehreren Ebenen (15) angeordnet sind, die jeweils senkrecht zur Mittelachse (12) ausgerichtet ist oder sind.

2. Verfahren nach Anspruch 1, bei dem die Öffnungen (14) in jeder der Ebenen (15) äquidistant um einen durch eine Schnittline der jeweiligen Ebene (15) mit der Wandung (13) definierten Umfang verteilt angeordnet sind.

3. Verfahren Anspruch 1 oder Anspruch 2, bei dem die Öffnungen (14) in jeder der Gruppen in mehreren der Ebenen (15) angeordnet sind und eine Maximaldistanz der Ebenen (15), in der die Öffnungen (14) einer der Gruppen liegen, zueinander geringer ist als eine Minimaldistanz der Ebenen (15), in der die Öffnungen (14) zweier unterschiedlicher Gruppen liegen.

4. Verfahren nach einem der vorstehenden Ansprüche, bei denen in jeder der Ebenen (15) zwei, drei, vier oder mehr der Öffnungen (14) angeordnet sind.

5. Verfahren nach Anspruch 1, bei dem in der Abschlussfläche (16) zumindest eine weitere Öffnung (17) ausgebildet ist.

6. Verfahren nach einem der vorstehenden Ansprüche, bei dem der zylindrische Abschnitt mit dem zweiten Ende mit einer Dampfzuleitung (18) und/oder Halterung verbunden ist oder wird, die sich von dem zweiten Ende des zylindrischen Abschnitts (11) zu einer Wandung (110) des Oxidationsreaktors (100) erstreckt.

7. Verfahren nach Anspruch 6, bei der die Öffnungen (14) derart angeordnet sind, dass aus diesen der Dampf jeweils in einer Ausströmrichtung ausströmt, die unterschiedlich zu einer Richtung ist, in der sich die Dampfzuleitung (18) und/oder die Halterung in Draufsicht aus Richtung der Mittelachse (12) erstreckt.

8. Verfahren nach einem der vorstehenden Ansprüche, bei dem ein Abstand zwischen dem zweiten Ende und einer am nächsten hierzu angeordneten ersten Gruppe von Öffnungen (14) L beträgt, wobei L größer oder gleich 15 mm ist.

9. Verfahren nach Anspruch 8, bei dem ein Abstand zwischen zumindest einem Teil der Gruppen von Öffnungen gleich ist und L beträgt.

10. Verfahren nach Anspruch 9, bei dem ein Abstand zwischen der ersten Gruppe von Öffnungen und einer auf diese in Richtung des ersten Endes folgenden zweiten Gruppe von Öffnungen das 1,5-fache von L beträgt.

11. Verfahren nach einem der vorstehenden Ansprüche, bei dem ein Abstand zwischen dem ersten Ende und einer am nächsten hierzu angeordneten Gruppe von Öffnungen (14) größer als M ist, wobei M dem 1,5-fachen eines Durchmessers der Öffnungen (14) entspricht.

12. Verfahren nach einem der vorstehenden Ansprüche, bei dem die Öffnungen (14) von Dampfführungsstrukturen umgeben sind, die eine Ausströmrichtung definieren, die einer Radialrichtung ausgehend von der Mittelachse in der jeweiligen Ebene entspricht oder um bis zu 30° gegenüber dieser geneigt ist.

13. Oxidationsreaktor (100) zum Einsatz in einer Anlage zur Durchführung eines Verfahrens zur Behandlung einer Ablauge einer Laugewäsche, wobei die Anlage Mittel aufweist, die dafür eingerichtet sind, die Ablauge zusammen mit Sauerstoff oder mit einem sauerstoffhaltigen Gasgemisch in den Oxidationsreaktor (100) einzuspeisen und mit Mittel aufweist, die dafür eingerichtet sind, Dampf in den Oxidationsreaktor (100) einzuleiten, **dadurch gekennzeichnet, dass** die Mittel, die dafür eingerichtet sind, den Dampf in den Oxidationsreaktor (100) einzuleiten, eine Dampfeinspeisevorrichtung (10) umfassen, die einen oder mehrere zylindrische Abschnitte (11) mit jeweils einer Mittelachse (12) und jeweils einer Wandung (13), jeweils einem ersten Ende und jeweils einem zweiten Ende aufweist, wobei das erste Ende jeweils nach unten weist und der eine oder die mehreren zylindrischen Abschnitte (11) jeweils an dem ersten Ende durch eine Abschlussfläche (16) verschlossen sind, so dass sich in dem einen oder in den mehreren zylindrischen Abschnitten (11) durch eine Kondensation des Dampfs jeweils Kondensat ansammeln kann, die Mittelachse (12) lotrecht ausgerichtet ist, in der Wandung mehrere Gruppen von Öffnungen (14) ausgebildet sind, jede der Gruppen mehrere der Öffnungen (14) umfasst, und die mehreren Öffnungen (14) jeder der Gruppen in einer oder mehreren Ebenen (15) angeordnet sind, die jeweils senkrecht zur Mittelachse (12) ausgerichtet ist oder sind.

14. Anlage zur Durchführung eines Verfahrens zur Behandlung einer Ablauge einer Laugewäsche, mit Mitteln, die dafür eingerichtet sind, die Ablauge zusammen mit Sauerstoff oder mit einem sauerstoffhaltigen Gasgemisch in einen Oxidationsreaktor (100) einzuspeisen und mit Mitteln, die dafür eingerichtet sind, Dampf in den Oxidationsreaktor (100) einzuleiten, **dadurch gekennzeichnet, dass** der Oxidationsreaktor (100) als Oxidationsreaktor (100) gemäß Anspruch 13 ausgebildet ist.

## Claims

1. Method for treating spent lye of a caustic wash using an oxidation reactor (100), wherein the spent lye is introduced into the oxidation reactor (100) with oxygen or with an oxygen-containing gas mixture and steam is introduced into the oxidation reactor (100), **characterized in that** the steam is at least partially introduced by means of a steam feeding device (10) having one or more cylindrical sections (11), each having a central axis (12) and a wall (13), a first end and a second end, wherein the first end points downwards and the one or more cylindrical sections (11) are each closed at the first end by an end surface (16) so that condensate can collect in each of the one or more cylindrical sections (11) by condensation of the steam, the central axis (12) is perpendicularly aligned, several groups of openings (14) are formed in the wall, each of the groups comprising a plurality of the openings (14), and the plurality of openings (14) of each of the groups is arranged in one or more planes (15) that are each aligned perpendicularly to the central axis (12).

2. Method according to claim 1, wherein the openings (14) in each of the planes (15) are arranged equidistant about a circumference defined by a cutting line of the respective plane (15) and the wall (13).

3. Method according to claim 1 or claim 2, wherein the openings (14) in each of the groups are arranged in a plurality of the planes (15) and a maximum distance of the planes (15), in which the openings (14) of one of the groups are located, is less than a minimum distance of the planes (15), in which the openings (14) of two different groups are located.

4. Method according to any one of the preceding claims, wherein in each of the planes (15) two, three, four or more of the openings (14) are arranged.

5. Method according to claim 1, wherein in the end surface (16) at least one further opening (17) is formed.

6. Method according to any one of the preceding claims, wherein the cylindrical section is connected to a steam supply line (18) and/or holder with its second end, which extends from the second end of the cylindrical section (11) to a wall (110) of the oxidation reactor (100).

7. Method according to claim 6, wherein the openings (14) are arranged such that the steam flows out of them in an outflow direction which is different from a direction in which the steam supply line (18) and/or the holder extends, in plan view, from the direction of the central axis (12).

8. Method according to any one of the preceding claims, wherein a distance between the second end and a first group of openings (14) arranged closest thereto is L, with L being greater than or equal to 15 mm.

9. Method according to claim 8, wherein a distance between at least one part of the groups of openings is the same and is L.

10. Method according to claim 9, wherein a distance between the first group of openings and a second group of openings following it in the direction of the first end is 1.5 times L.

11. Method according to any one of the preceding claims, wherein a distance between the first end and a group of openings (14) arranged closest thereto is greater than M, with M being 1.5 times a diameter of the openings (14).

12. Method according to any one of the preceding claims, wherein the openings (14) are surrounded by steam-conducting structures, which define an outflow direction that corresponds to a radial direction starting from the central axis in the respective plane or is inclined by up to 30° relative thereto.

13. Oxidation reactor (100) for use in a device for carrying out a method for treating spent lye of a caustic wash, wherein the device has means which are designed to feed the spent lye together with oxygen or with an oxygen-containing gas mixture into the oxidation reactor (100) and with has means which are configured to introduce steam into the oxidation reactor (100), **characterized in that** the means, which are configured to introduce the steam into the oxidation reactor (100), comprise a steam feed device (10) having one or more cylindrical sections (11), each having a central axis (12) and a wall (13), a first end and a second end, wherein the first end points downwards and the one or more cylindrical sections (11) are each closed at the first end by an end surface (16) so that condensate can collect in each of the one or more cylindrical sections (11) by condensation of the steam, the central axis (12) is perpendicularly aligned, several groups of openings (14) are formed in the wall, each of the groups comprising a plurality of the openings (14), and the plurality of openings (14) of each of the groups is arranged in one or more planes (15) that are each aligned perpendicularly to the central axis (12).

14. Device for carrying out a method for treating spent lye of a caustic wash, comprising means which are configured to feed the spent lye together with oxygen or with an oxygen-containing gas mixture into an oxidation reactor (100) and with means which are configured to introduce steam into the oxidation reactor (100), **characterized in that** the oxidation reactor (100) is designed as an oxidation reactor (100) according to claim 13.

## Revendications

1. Procédé de traitement d'une lessive résiduaire d'un lavage alcalin à l'aide d'un réacteur d'oxydation (100), dans lequel la lessive résiduaire est apportée au réacteur d'oxydation (100) avec de l'oxygène ou avec un mélange gazeux contenant de l'oxygène et de la vapeur est introduite dans le réacteur d'oxydation (100), **caractérisé en ce que** la vapeur est introduite au moins partiellement au moyen d'un dispositif d'alimentation en vapeur (10), lequel comporte une ou plusieurs sections (11) cylindriques comportant respectivement un axe médian (12) et comportant respectivement une paroi (13), respectivement une première extrémité et respectivement une seconde extrémité, dans lequel la première extrémité pointe respectivement vers le bas et la ou les sections (11) cylindriques sont respectivement fermées au niveau de la première extrémité par une surface de fermeture (16), de telle sorte que dans la ou les sections (11) cylindriques, un condensat puisse respectivement s'accumuler par condensation de la vapeur, l'axe médian (12) est ou devient orienté perpendiculairement, une pluralité de groupes d'ouvertures (14) sont formés dans la paroi, chacun des groupes comprend une pluralité d'ouvertures (14) et la pluralité d'ouvertures (14) des groupes respectifs sont disposées dans un ou plusieurs plans (15), dont chacun est ou devient orienté perpendiculairement à l'axe médian (12).

2. Procédé selon la revendication 1, dans lequel les ouvertures (14) dans chacun des plans (15) sont réparties de manière équidistante autour d'une circonférence définie par une ligne d'intersection du plan (15) respectif avec la paroi (13).

3. Procédé selon la revendication 1 ou la revendication 2, dans lequel les ouvertures (14) dans chacun des groupes sont situées dans une pluralité de plans (15) et une distance maximale des plans (15), dans lesquels se trouvent les ouvertures (14) de l'un des groupes, est inférieure à une distance minimale des plans (15), dans lesquels se trouvent les ouvertures (14) de deux groupes différents.

4. Procédé selon l'une quelconque des revendications précédentes, dans lequel au moins deux, trois ou quatre des ouvertures (14) sont disposées dans chacun des plans (15).

5. Procédé selon la revendication 1, dans lequel, dans la surface de fermeture (16), au moins une autre ouverture (17) est formée.

6. Procédé selon l'une quelconque des revendications précédentes, dans lequel la section cylindrique est ou devient reliée par la seconde extrémité à une conduite d'alimentation en vapeur (18) et/ou à un support, lequel s'étend de la seconde extrémité de la section (11) cylindrique à une paroi (110) du réacteur d'oxydation (100).

7. Procédé selon la revendication 6, dans lequel les ouvertures (14) sont disposées de telle sorte que la vapeur s'écoule hors de celles-ci respectivement dans une direction d'évacuation, laquelle est différente d'une direction dans laquelle la conduite d'alimentation en vapeur (18) et/ou le support s'étendent dans une vue de dessus depuis la direction de l'axe médian (12).

8. Procédé selon l'une quelconque des revendications précédentes, dans lequel une distance entre la seconde extrémité et un premier groupe d'ouvertures (14) le plus proche de celle-ci est L, dans lequel L est supérieur ou égal à 15 mm.

9. Procédé selon la revendication 8, dans lequel une distance entre au moins une partie des groupes d'ouvertures est égale et est L.

10. Procédé selon la revendication 9, dans lequel une distance entre le premier groupe d'ouvertures et un second groupe d'ouvertures suivant celui-ci dans la direction de la première extrémité est de 1,5 fois L.

11. Procédé selon l'une quelconque des revendications précédentes, dans lequel une distance entre la première extrémité et un groupe d'ouvertures (14) le plus proche de celle-ci est supérieure à M, dans lequel M correspond à 1,5 fois un diamètre des ouvertures (14).

12. Procédé selon l'une quelconque des revendications précédentes, dans lequel les ouvertures (14) sont entourées de structures de guidage de vapeur, lesquelles définissent une direction d'évacuation, laquelle correspond à une direction radiale partant de l'axe médian dans le plan respectif ou laquelle est inclinée jusqu'à 30° par rapport à celui-ci.

13. Réacteur d'oxydation (100) destiné à être utilisé dans une installation destinée à la mise en œuvre d'un procédé de traitement d'une lessive résiduaire d'un lavage alcalin, dans lequel l'installation comporte des moyens, lesquels sont conçus pour alimenter le réacteur d'oxydation (100) en lessive résiduaire conjointement avec de l'oxygène ou avec un mélange gazeux contenant de l'oxygène et comporte des moyens, lesquels sont conçus pour introduire de la vapeur dans le réacteur d'oxydation (100), **caractérisé en ce que** les moyens, lesquels sont conçus pour introduire de la vapeur dans le réacteur d'oxydation (100) comprennent un dispositif d'alimentation en vapeur (10), lequel comporte une ou plusieurs sections (11) cylindriques comportant respectivement un axe médian (12) et respectivement une paroi (13), respectivement une première extrémité et respectivement une seconde extrémité, dans lequel la première extrémité pointe respectivement vers le bas et la ou les sections (11) cylindriques sont respectivement fermées au niveau de la première extrémité par une surface de fermeture (16), de telle sorte que dans la ou les sections (11) cylindriques, un condensat puisse s'accumuler par condensation de la vapeur, l'axe médian (12) est orienté perpendiculairement, une pluralité de groupes d'ouvertures (14) sont formés dans la paroi, chacun des groupes comprend une pluralité d'ouvertures (14) et la pluralité d'ouvertures (14) de chacun des groupes sont disposées dans un ou plusieurs plans (15), lesquels sont respectivement orientés perpendiculairement à l'axe médian (12).

14. Installation destinée à la mise en œuvre d'un procédé de traitement d'une lessive résiduaire d'un lavage alcalin, comportant des moyens, lesquels sont conçus pour alimenter en lessive résiduaire conjointement avec de l'oxygène ou avec un mélange gazeux contenant de l'oxygène un réacteur d'oxydation (100) et comportant des moyens, lesquels sont conçus pour introduire de la vapeur dans le réacteur d'oxydation (100), **caractérisée en ce que** le réacteur d'oxydation (100) est conçu sous la forme de réacteur d'oxydation (100) selon la revendication 13.
